# EUROPEAN PATENT APPLICATION

(11) **EP 4 386 715 A1**
(43) Date of publication of application: **19.06.2024**
(21) Application number: 23205238.1
(22) Date of filing: 23.10.2023
(51) Int. Cl.: G08G 5/04, G08G 5/06, G08G 5/00

(54) **SYSTEMS AND METHODS FOR PROVIDING RUNWAY ALERTS TO AIRCRAFT**

(30) Priority: 16.12.2022 US 202218067174
(71) Applicant: The Boeing Company, Arlington, VA 22202 (US)
(72) Inventor: PYTEL, Krzysztof, Arlington, 22202 (US); KUC, Dariusz, Arlington, 22202 (US)
(74) Representative: Boult Wade Tennant LLP

(57) **Abstract**

A system and a method include a control unit for determining a runway alert for an aircraft at an airport. The control unit is configured to monitor a position of the aircraft at the airport, and output the runway alert to the aircraft in response to the aircraft being within a predetermined distance of a runway at the airport.

## Description

### FIELD OF THE DISCLOSURE

Examples of the present disclosure generally relate to systems and methods for providing runway alerts to aircraft at an airport.

### BACKGROUND OF THE DISCLOSURE

Aircraft are used to transport passengers and cargo between various locations. Numerous aircraft depart from and arrive at a typical airport every day.

An aircraft can travel along one or more taxiways toward a runway. Once on the runway, the aircraft can be cleared to depart from the airport. Because numerous aircraft (such as numerous commercial airplanes) are landing and taking off in relation to a runway, a pilot of an aircraft cannot simply taxi onto the runway without considering other ground and air traffic.

Indeed, a runway incursion represents a potential serious incident at an airport. For example, an unauthorized aircraft that enters an active runway can potentially pose a risk of collision with respect to other aircraft departing or arriving in relation to the runway.

### SUMMARY OF THE DISCLOSURE

A need exists for a system and a method for providing appropriate advisory notification to a pilot when approaching an active runway. With that need in mind, there is provided a system including a control unit for determining a runway alert for an aircraft at an airport. The control unit is configured to monitor a position of the aircraft at the airport, and output the runway alert to the aircraft in response to the aircraft being within a predetermined distance of a runway at the airport.

In at least one example, the control unit is configured to determine the predetermined distance in relation to a reference segment extending from a front portion of the aircraft. As examples, the reference segment is a linear segment or a conic segment.

In at least one example, the control unit is further configured to output the runway alert in response to the reference segment intersecting a defined portion of the runway. A length of the reference segment can be based on an angle between the reference segment and the defined portion. The defined portion of the runway can be a center line segment or a boundary edge segment of the runway.

In at least one example, the aircraft includes a user interface having a display. The runway alert is shown on the display.

The system can also include a tracking sub-system configured to track the position of the aircraft at the airport. The control unit is in communication with the tracking sub-system.

The system can also include an airport map sub-system that includes data for a map of the airport. The control unit is configured to monitor the position of the aircraft in relation to the map of the airport.

In at least one example, the control unit is further configured to automatically operate the aircraft in response to the runway alert being output.

The control unit can be an artificial intelligence or machine learning system.

There is also provided a method for determining a runway alert for an aircraft at an airport. The method includes monitoring, by a control unit, a position of the aircraft at the airport, and outputting, by the control unit, the runway alert to the aircraft in response to the aircraft being within a predetermined distance of a runway at the airport.

There is also provided a non-transitory computer-readable storage medium comprising executable instructions that, in response to execution, cause one or more control units comprising a processor, to perform operations comprising monitoring a position of an aircraft at an airport; determining a predetermined distance of a runway at the airport in relation to a reference segment extending from a front portion of the aircraft; and outputting a runway alert to the aircraft in response to the aircraft being within the predetermined distance of the runway at the airport, wherein said outputting comprises outputting the runway alert in response to the reference segment intersecting a defined portion of the runway.

### BRIEF DESCRIPTION OF THE DRAWINGS

Figure 1 illustrates a schematic block diagram of system for providing a runway alert to aircraft.
Figure 2 illustrates a representation of an aircraft on an airport map.
Figure 3 illustrates a flow chart of a method for providing a runway alert to aircraft.
Figure 4 illustrates a schematic block diagram of a control unit.
Figure 5 illustrates a perspective front view of an aircraft.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

As described herein, examples of the present disclosure provide systems and methods for providing runway alerts, such as to pilots within cockpits or flights decks of aircraft.

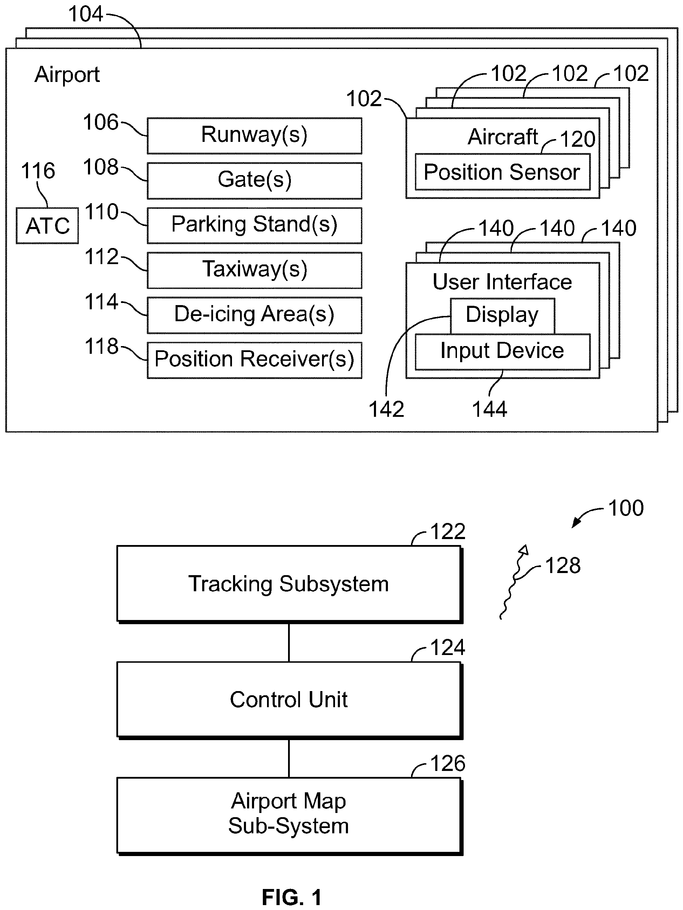

Figure 1 illustrates a schematic block diagram of system 100 for providing a runway alert to aircraft 102, according to an example of the present disclosure. The system 100 is configured to provide runway alerts to aircraft 102 at one or more airports 104. In some examples, the system 100 is configured to provide runway alerts to aircraft 102 at numerous airports 104, such as a plurality of airports 104 within a city (for example, O'Hare International Airport and Midway International Airport in Chicago, Illinois), a state, a region including one or more states, one or more countries, a hemisphere, or the entire world. In further examples, the system 100 is configured to provide runway alerts to aircraft 102 at all of the airports 104 in such regions. In other examples, the system 100 is configured to provide runway alerts to aircraft 102 at less than all of the airports 104 in such regions. In some examples, the system 100 is configured to provide runway alerts to aircraft 102 at a single airport 104.

The airports 104 include various areas, such as one or more runways 106, one or more gates 108, one or more parking stands 110, one or more taxiways 112, one or more de-icing areas 114, and the like. The airports 104 also include air traffic control (ATC) 116, which is configured to coordinate and schedule takeoff and landing of the aircraft 102 at the airports 104. The aircraft 102 are configured to travel among the runway(s) 106, the gate(s) 108, the parking stand(s) 110, the taxiway(s) 112, and the de-icing areas 114 at the airports 104. For example, the aircraft 102 are deiced (that is, undergo de-icing operations) at the de-icing area(s) 114 of an airport(s) 104.

Positions of the aircraft 102 on the ground at the airports 104 are detected by one or more position receivers 118 that receive position signals output by position sensors 120 of the aircraft 102. For example, the position receivers 118 are automatic dependent surveillance-broadcast (ADS-B) receivers that receive ADS-B signals output by the positions sensors 120 of the aircraft 102. As another example, the position sensor 120 can be a global positioning system sensor. The position sensor 120 outputs a signal indicative of one or more of the position, altitude, heading, acceleration, velocity, and/or the like of the aircraft 102. The signal is received by the position receiver(s) 118, which is in communication with a tracking sub-system 122 of the system 100.

The system 100 includes a control unit 124 in communication with the tracking sub-system 122, and an airport map sub-system 126 (such as a database, datastore, map control unit, and/or the like), such as through one or more wired or wireless connections. Each of the control unit 124, the tracking sub-system 122, and the airport map sub-system 126 can be remotely located from one another, or located at a common location (or a first subset can be commonly located, while a second subset, whether commonly located or not, can be remotely located from the first subset). The components of system 100 can be located at an airport 104 or remotely located from the airport(s) 104. In at least one example, the control unit 124 correlates the position of the aircraft 102 on the ground, as tracked via the tracking sub-system 122, in relation to a map of the airport 104, as stored in the airport map sub-system 126.

A user interface 140 includes a display 142 and an input device 144, both of which can be in communication with the control unit 124. The display 142 can be a monitor, screen, television, touchscreen, and/or the like. The input device 144 can include a keyboard, mouse, stylus, touchscreen interface (that is, the input device 144 can be integral with the display 142), and/or the like.

In at least one example, each aircraft 102 includes a user interface 140. For example, a user interface 140 can be in communication with and/or form a part of a flight computer of an aircraft 102. As another example, a user interface 140 can be part of a separate computer workstation aboard an aircraft 102. As another example, the user interface 140 can be a handheld device, such as a smart phone, tablet, or the like, within an aircraft 102. Optionally, the user interface 140 can be located remotely from the aircraft 102, such as at an air traffic control location, a ground control location, and/or the like.

The control unit 124 can be in communication with the user interface(s) 140 through one or more wired (if at the same location), or wireless connections. For example, the control unit 124 can include a communication device, such as one or more antennas, transceivers, and/or the like, which allow for wireless communication with the user interface(s) 140. As another example, the control unit 124 and the user interface(s) 140 can be in communication through an intermediate medium, such as through the Internet, a private communication network, and/or the like.

The tracking sub-system 122 is configured to track a current position of an aircraft 102 on the ground at an airport 104, for example during ground movements of the aircraft 102 while the aircraft 102 is taxiing around the airport 104. The control unit 124 monitors the position of the aircraft 102 through data received from the tracking sub-system 122. That is, the tracking sub-system 122 tracks the position of the aircraft 102, and the control unit 124 receives such data from the tracking sub-system 122. In at least one example, the tracking sub-system 122 is an ADS-B tracking sub-system. In such an example, the ADS-B tracking sub-system 122 determines a current position of an aircraft 102 via satellite navigation through a positional signal of the aircraft 102 output by the position sensor 120, which is received by the position receiver(s) 118. The position sensor 120 can be or include a transmitter that periodically outputs information about the aircraft 102, such as identification details, current position, current altitude, and current velocity. The tracking sub-system 122 receives the transmitted position signal from the position receiver(s) 118 to determine a current and real time position, heading, velocity, and the like of the aircraft 102. Alternatively, the tracking sub-system 122 can be a radar system, GPS system, and/or other such system that is configured to track the position of the aircraft 102.

The airport map sub-system 126 includes data for maps of layouts of each airport 104. For example, the airport map sub-system 126 provides airport map data regarding the various areas of the airport 104, such as the runway(s) 106. In at least one example, the airport map sub-system 126 locates areas of the airport 104, such as the runway(s) 106, through global position system (GPS) data. In at least one other example, the airport map sub-system 126 locates areas of the airport 104 through various sensors and features that are registered or otherwise associated with the various areas of the airport 104. Optionally, the control unit 124 can monitor the position of the aircraft 102 with respect to an airport 104 without the use of separate maps. In such an example, the control unit 124 may be programmed with data regarding locations of runways 106, for example, such as through GPS signals.

Each aircraft 102 on the ground at the airport(s) 104 is tracked by the tracking sub-system 122, which receives position information of the aircraft 102 from the position receiver(s) 118 at the airport(s) 104. The control unit 124 receives position data indicative of the real-time, current positions of the aircraft 102 from the tracking sub-system 122. The control unit 124 determines the position of the aircraft 102 in relation to a location of the airport 104 (such as the runway(s) 106) by correlating the position data with airport map data received from the airport map sub-system 126. As such, the control unit 124 determines a real-time, current position of the aircraft 102 on the ground at the airport 104.

In operation, the control unit 124 monitors a current position of an aircraft 102 in relation to one or more runways 106 of the airport 104. For example, the control unit 124 monitors a current position of an aircraft 102 while it is taxiing to one of the one or more runways 106. In response to the aircraft 102 reaching a predetermined distance in relation to a runway 106, the control unit 124 outputs a runway alert, such as within a runway alert signal 128 to the aircraft 102. This runway 106 may be the runway 106 from which the aircraft 102 will depart, or it may be another runway 106 that must be crossed while taxiing to reach the departure runway 106. The runway alert signal 128 is received by a user interface 140 of the aircraft 102 that is within the predetermined distance of the runway 106. The runway alert signal 128 is an electronic signal including data regarding a runway alert, which provides information indicating that the aircraft 102 is approaching and/or within a predetermined distance of a runway 106. The data is shown or broadcasted on the user interface 140. For example, the data can be shown on the display 142 as text, a graphic, flashing lights, and/or the like indicating a runway alert. As another example, the data can be broadcast as an audio signal through one or more speakers of the user interface 140.

In at least one example, the control unit 124 determines a runway alert for an aircraft 102 based on a position of the aircraft 102 (such as determined through the tracking sub-system 122), a course or heading of the aircraft 102 (such as determined through the tracking sub-system 122), and a location and/or shape of the runway 106 at the airport 104 (such as determined through data in the airport map sub-system 126.

In at least one example, the control unit 124 can also utilize one or more configurable parameters when determining the runway alert. As an example, the parameters include a predetermined time period for evaluation. For example, the control unit 124 can analyze the position and heading of the aircraft 102 in relation to the runway 106 every three seconds. Optionally, the predetermined period for evaluation can be greater than three seconds, such as every five seconds. As another example, the predetermined period for evaluation can be less than three seconds, such as every second. As another example, the control unit 124 can continually monitor the position and heading of a taxiing aircraft 102 in relation to the runway 106. The predetermined period for evaluation can be variable, depending on current levels of air traffic, weather conditions, a specific layout of an airport 104, and/or the like.

As an example, the parameters also include a predetermined distance of a taxiing aircraft 102 in relation to the runway 106. For example, the predetermined distance can be 150 meters. As another example, the predetermined distance can be 100 meters. The predetermined distance can be less than 100 meters or more than 150 meters. In at least one example, the predetermined distance can be variable, depending on current levels of air traffic, weather conditions, and/or the like.

In at least one example, the predetermined distance can further be based on a current heading of the taxiing aircraft 102. For example, if the aircraft 102 is facing and moving away from the runway 106, the control unit 124 may refrain from outputting a runway alert. The control unit 124 outputs the runway alert in response to the aircraft 102 having a heading that is disposed toward the runway 106, and optionally at a predetermined angle in relation to the runway 106.

In at least one example, the control unit 124 receives position data of the aircraft 102 in relation to an airport map. The control unit 124 may then determine a time elapsed since a last position update of the aircraft 102 in order to limit an amount of computations. The control unit 124 then adds the current position of the aircraft 102 to an aircraft position store, such as within a memory of or otherwise coupled to the control unit 124. The control unit 124 then computes a time period between a current position timestamp and a timestamp of a most recent evaluation of the aircraft 102 in relation to a runway 106. If the time period is lower than a configured time period, the process may end.

The control unit 124 also determines course and heading information for the aircraft 102. Further, the control unit 124 can assess whether the course of the aircraft 102 is available in an aircraft position report, and if so, checks whether the heading is available in the aircraft position report. If so, the control unit 124 uses the heading to calculate the course of the aircraft 102 as a bisection of heading available in a previous position report and a current heading. Otherwise, the control unit 124 saves the current evaluation timestamp in an evaluation timestamp store and ends the process.

The control unit 124 also determines whether the taxiing aircraft 102 is moving toward the runway 106. A segment of configurable distance (such as between 100-200 meters) to a runway 106 is computed from the position of the aircraft 102 in relation to the course retrieved or calculated previously.

The control unit 124 also retrieves a geometry (for example, size and shape) of a runway 106 from the airport map sub-system 126. The control unit 124 determines an intersection between the segment of configurable distance and a portion of the runway 106 (such as a center line, a closest edge line, or the like of the runway 106). If the control unit 124 determines no intersection, the control unit 124 saves the current evaluation timestamp in the evaluation timestamp store, and the process ends. If, however, the control unit 124 determines an intersection between the segment of configurable distance and the portion of the runway 106, an identifier of the intersected runway 106 is retrieved from the airport map sub-system 126. The control unit 124 then outputs a runway alert, such as via the runway alert signal 128, to the aircraft 102 that approaches the runway 106.

Because a position of an aircraft 102 may vary between consecutive reports depending on the quality of a position signal (such as a GPS signal), a smoothing algorithm (for example, a Kalman Filter) may be used to improve the stability of position reports. Further, instead of using a computed segment to determine an intersection with a runway 106, the control unit 124 may determine a heading cone extending from the aircraft 102, and check intersection with such cone, instead of a linear segment.

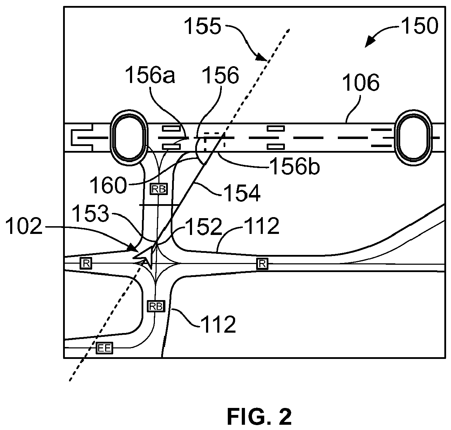

Figure 2 illustrates a representation of an aircraft 102 on an airport map 150, according to an example of the present disclosure. Referring to Figures 1 and 2, the control unit 124 retrieves the airport map 150 from the airport map sub-system 126, and superimposes a position of the aircraft 102 on the airport map 150. As shown on the airport map 150, the airport includes a runway 106 and taxiways 112. The tracking sub-system 122 indicates that the aircraft 102 is on a taxiway 112 and has a current heading 152 that is disposed toward the runway 106.

The control unit 124 determines a reference segment 154 from a front portion 153 (such as a nose) of the aircraft 102 (oriented in relation to a current heading). The reference segment 154 can be a predetermined distance. For example, the predetermined distance can be between 100-200 meters. Optionally, the predetermined distance of the reference segment 154 can be less than 100 meters, or greater than 200 meters. The reference segment 154 can be a linear segment, or a conic segment.

The control unit 124 compares the reference segment 154 with a defined portion 156 of the runway 106. The defined portion 156 can be a center line segment 156a of the runway 106. As another example, the defined portion 156 can be a boundary edge segment 156b of the runway 106. If the reference segment 154 extends to and intersects the defined portion 156, the control unit 124 outputs the runway alert to the aircraft 102. For example, if the reference segment 154 is 150 meters, and the defined portion 156 is less than 150 meters from the aircraft 102, the control unit 124 outputs the runway alert to the aircraft 102. If, however, the defined portion if more than 150 meters from the aircraft 102, the reference segment 154 does not extend to and intersect the defined portion 156, the control unit 124 refrains from outputting the runway alert.

In at least one example, a length of the reference segment 154 is based on an angle 160 between the reference segment 154 and the defined portion 156. For example, a length of the reference segment 154 can vary depending on an angle 160 between the reference segment 154 extending from and the defined portion 156 of the runway 106. For example, the length of the reference segment 154, as determined by the control unit 124, can decrease as the angle 160 increases toward 90 degrees. Conversely, the length of the reference segments 154 can increase as the angle decreases toward 0 degrees. For example, the length of the reference segment 154 can be 140 meters when the angle 160 is 45 degrees, 100 meters when the angle 160 is 90 degrees, and 200 meters when the angle is 15 degrees. Such examples are non-limiting. In general, the control unit 124 can be configured to vary the length of the reference segment 154 based on the angle 160 between the reference segment 154 extending from the front portion 153 of the aircraft 102 and the defined portion 156 of the runway 106.

In at least one example, a course 155 of the aircraft 102 includes the reference segment 154. The course 155 is longer than the reference segment 154. The reference segment 154 can be a shorter portion of the course 155. The control unit 124 can determine a variable length of the reference segment 154 along the course 155.

Referring to Figures 1 and 2, the system 100 includes the control unit 124 for determining a runway alert for an aircraft 102 at an airport 104. The control unit 124 is configured to monitor a position of the aircraft 102 on the ground at the airport 104 (such as through received data from the tracking sub-system 122), and output the runway alert to the aircraft 102 in response to the aircraft 102 being within a predetermined distance of a runway 106 at the airport 104. In at least one example, the control unit 124 is configured to determine the predetermined distance in relation to the reference segment 154 extending from the front portion 153 of the aircraft 102. The control unit 124 is further configured to output the runway alert in response to the reference segment 154 intersecting the defined portion 156 of the runway 106.

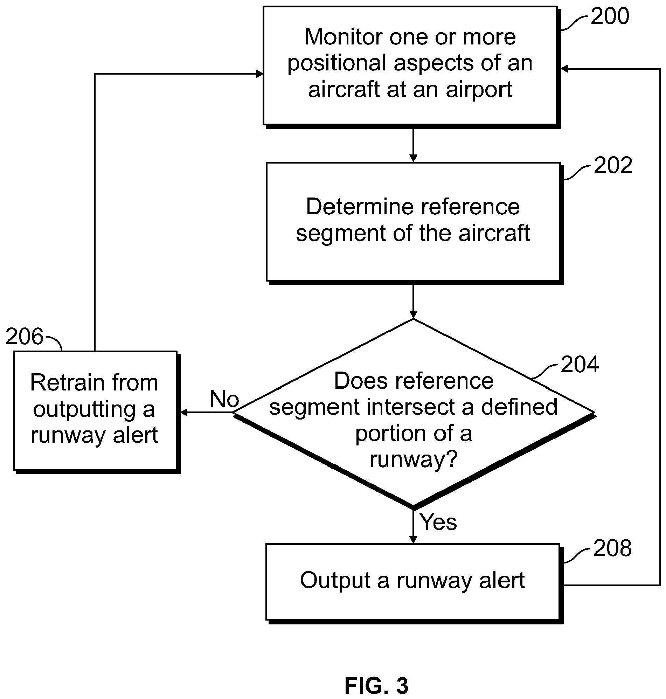

Figure 3 illustrates a flow chart of a method for providing a runway alert to aircraft 102, according to an example of the present disclosure. Referring to Figures 1-3, at 200, the control unit 124 monitors one or more positional aspects of the aircraft 102 at an airport 104. The positional aspects include a current position, a current heading, a current course, a current speed, and/or the like. For example, the tracking sub-system 122 is configured to generate the positional aspects in conjunction with the position sensor(s) 120 of the aircraft 102 being received by the position receiver(s) 118.

At 202, the control unit 124 determines the reference segment 154 of the aircraft 102. The reference segment 154 can be a linear or conic segment extending from the front portion 153 of the aircraft 102. The control unit 124 can determine a length of the reference segment 154 as a fixed distance (such as between 50 - 200 meters). Optionally, the control unit 124 can vary the length of the reference segment 154 based on the angle 160.

At 204, the control unit 124 determines if the reference segment 154 intersects the defined portion 156 of a runway 106. If the length of the reference segment 154 is too short to reach the runway 106 (with the position of the aircraft 102 superimposed onto a map of the airport 104, for example), the reference segment 154 does not intersect the runway 106. If the reference segment 154 does not intersect the defined portion 156 at 204, the method proceeds to 206, at which the control unit 124 refrains from outputting a runway alert to the aircraft 102. The method then returns to 200.

If, however, the reference segment 154 does intersect the defined portion 156 at 204, the method proceeds to 208, at which the control unit 124 outputs the runway alert to the aircraft 102. The method then returns to 200.

In at least one other example, the control unit 124 can automatically operate the aircraft 102 in response to outputting the runway alert to the aircraft 102. For example, in response to outputting the runway alert, the control unit 124 can automatically operate the controls of the aircraft 102 to prevent the aircraft 102 from moving further toward and/or otherwise onto the runway 106. The control unit 124 can continue such operation until ATC 116 clears the aircraft 102 for movement onto the runway 106. As another example, the control unit 124 can monitor positions and movements of other aircraft approaching, traveling on, and/or taking off from the runway 106, and automatically control operation of the aircraft 102 based on positions and movements of the other aircraft. For example, when the control unit 124 determines that another aircraft is approaching the runway 106 to land and at a current speed will touch down in three minutes or less, the control unit 124 can prevent the aircraft 102 that received the output runway alert from moving toward the runway 106 until the other aircraft has landed and moved onto a taxiway 112. Optionally, the control unit 124 does not automatically control aircraft 102 in response to outputting a runway alert and/or monitored positions of other aircraft.

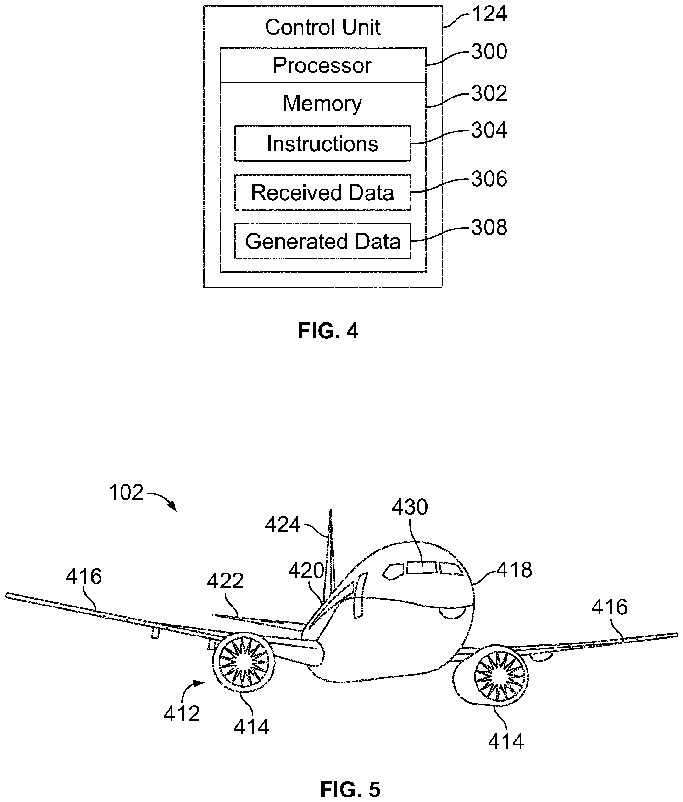

Figure 4 illustrates a schematic block diagram of the control unit 124, according to an example of the present disclosure. In at least one example, the control unit 124 includes at least one processor 300 in communication with a memory 302. The memory 302 stores instructions 304, received data 306, and generated data 308. The control unit 124 shown in Figure 4 is merely exemplary, and non-limiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 124 may be or include one or more processors that are configured to control operation, as described herein.

The control unit 124 is configured to execute a set of instructions that are stored in one or more data storage units or elements (such as one or more memories), in order to process data. For example, the control unit 124 may include or be coupled to one or more memories. The data storage units may also store data or other information as desired or needed. The data storage units may be in the form of an information source or a physical memory element within a processing machine.

The set of instructions may include various commands that instruct the control unit 124 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 124. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 124 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include features of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Referring to Figures 1-4, examples of the subject disclosure provide systems and methods that allow large amounts of data to be quickly and efficiently analyzed by a computing device. For example, the control unit 124 can analyze various aspects of numerous aircraft 102 at numerous airports 104 during a particular time period. As such, large amounts of data, which may not be discernable by human beings, are being tracked and analyzed. The vast amounts of data are efficiently organized and/or analyzed by the control unit 124, as described herein. The control unit 124 analyzes the data in a relatively short time in order to quickly and efficiently determine runway alerts and advisories. A human being would be incapable of efficiently analyzing such vast amounts of data in such a short time. As such, examples of the present disclosure provide increased and efficient functionality, and vastly superior performance in relation to a human being analyzing the vast amounts of data.

In at least one example, components of the system 100, such as the control unit 124, provide and/or enable a computer system to operate as a special computer system for determining runway alerts for one or more aircraft 102 at one or more airports 104. The control unit 124 improves upon standard computing devices by determining such runway alerts in an efficient and effective manner.

In at least one example, all or part of the systems and methods described herein may be or otherwise include an artificial intelligence (AI) or machine-learning system that can automatically perform the operations of the methods also described herein. For example, the control unit 124 can be an artificial intelligence or machine learning system. These types of systems may be trained from outside information and/or self-trained to repeatedly improve the accuracy with how data is analyzed to determine the runway alerts for aircraft 102 at one or more airports 104. Over time, these systems can improve by determining runway alerts with increasing accuracy and speed, thereby significantly reducing the likelihood of any potential errors. For example, the AI or machine-learning systems can learn and determine variable sizes, shapes, and lengths of reference segments based on prior positions and movements of aircraft at airports. The AI or machine-learning systems described herein may include technologies enabled by adaptive predictive power and that exhibit at least some degree of autonomous learning to automate and/or enhance pattern detection (for example, recognizing irregularities or regularities in data), customization (for example, generating or modifying rules to optimize record matching), and/or the like. The systems may be trained and re-trained using feedback from one or more prior analyses of the data, ensemble data, and/or other such data. Based on this feedback, the systems may be trained by adjusting one or more parameters, weights, rules, criteria, or the like, used in the analysis of the same. This process can be performed using the data and ensemble data instead of training data, and may be repeated many times to repeatedly improve the determination of the runway alerts. The training minimizes conflicts and interference by performing an iterative training algorithm, in which the systems are retrained with an updated set of data (for example, data received before, during, and/or after each flight of the aircraft 102) and based on the feedback examined prior to the most recent training of the systems. This provides a robust analysis model that can better determine runway alerts in a cost effective and efficient manner.

Figure 5 illustrates a perspective front view of an aircraft 102, according to an example of the present disclosure. The aircraft 102 includes a propulsion system 412 that includes engines 414, for example. Optionally, the propulsion system 412 may include more engines 414 than shown. The engines 414 are carried by wings 416 of the aircraft 102. In other examples, the engines 414 may be carried by a fuselage 418 and/or an empennage 420. The empennage 420 may also support horizontal stabilizers 422 and a vertical stabilizer 424. The fuselage 418 of the aircraft 102 defines an internal cabin 430, which includes a flight deck or cockpit, one or more work sections (for example, galleys, personnel carry-on baggage areas, and the like), one or more passenger sections (for example, first class, business class, and coach sections), one or more lavatories, and/or the like.

Figure 5 shows an example of an aircraft 102. It is to be understood that the aircraft 102 can be sized, shaped, and configured differently than shown in Figure 5.

Further, the disclosure comprises examples according to the following clauses:
Clause 1. A system comprising: a control unit for determining a runway alert for an aircraft at an airport, the control unit configured to: monitor a position of the aircraft at the airport, and output the runway alert to the aircraft in response to the aircraft being within a predetermined distance of a runway at the airport.
Clause 2. The system of Clause 1, wherein the control unit is configured to determine the predetermined distance in relation to a reference segment extending from a front portion of the aircraft.
Clause 3. The system of Clause 2, wherein the reference segment is a linear segment or a conic segment.
Clause 4. The system of Clauses 2 or 3, wherein the control unit is further configured to output the runway alert in response to the reference segment intersecting a defined portion of the runway.
Clause 5. The system of Clause 4, wherein a length of the reference segment is based on an angle between the reference segment and the defined portion.
Clause 6. The system of Clauses 4 or 5, wherein the defined portion of the runway is a center line segment or a boundary edge segment of the runway.
Clause 7. The system of any of Clauses 1-6, wherein the aircraft comprises a user interface having a display, wherein the runway alert is shown on the display.
Clause 8. The system of any of Clauses 1-7, further comprising a tracking sub-system configured to track the position of the aircraft at the airport, wherein the control unit is in communication with the tracking sub-system.
Clause 9. The system of any of Clauses 1-8, further comprising an airport map sub-system that includes data for a map of the airport, wherein the control unit is configured to monitor the position of the aircraft in relation to the map of the airport.
Clause 10. The system of any of Clauses 1-9, wherein the control unit is further configured to automatically operate the aircraft in response to the runway alert being output.
Clause 11. The system of any of Clauses 1-10, wherein the control unit is an artificial intelligence or machine learning system.
Clause 12. A non-transitory computer-readable storage medium comprising executable instructions that, in response to execution, cause one or more control units comprising a processor, to perform operations comprising: monitoring a position of an aircraft at an airport; determining a predetermined distance of a runway at the airport in relation to a reference segment extending from a front portion of the aircraft; and outputting a runway alert to the aircraft in response to the aircraft being within the predetermined distance of the runway at the airport, wherein said outputting comprises outputting the runway alert in response to the reference segment intersecting a defined portion of the runway.
Clause 13. A method for determining a runway alert for an aircraft performing ground movements at an airport, the method comprising: monitoring, by a control unit, a position of the aircraft on the ground at the airport; and outputting, by the control unit, the runway alert to the aircraft in response to the aircraft moving or being within a predetermined distance of a runway at the airport.
Clause 14. The method of Clause 13, further comprising determining, by the control unit, the predetermined distance in relation to a reference segment extending from a front portion of the aircraft.
Clause 15. The method of Clause 14, wherein the reference segment is a linear segment or a conic segment.
Clause 16. The method of Clause 14 or 15, wherein said outputting comprises outputting, by the control unit, the runway alert in response to the reference segment intersecting a defined portion of the runway.
Clause 17. The method of Clause 16, further comprising basing, by the control unit, a length of the reference segment on an angle between the reference segment and the defined portion.
Clause 18. The method of Clauses 16 or 17, wherein the defined portion of the runway is a center line segment or a boundary edge segment of the runway.
Clause 19. The method of any of Clauses 13-18, further comprising showing, by the control unit, the runway alert on a display of a user interface of the aircraft.
Clause 20. The method of any of Clauses 13-19, further comprising tracking, by a tracking sub-system in communication with the control unit, the position of the aircraft at the airport.
Clause 21. The method of any of Clauses 13-20, wherein said monitoring comprises monitoring the position of the aircraft in relation to a map of the airport.
Clause 22. The method of any of Clauses 13-21, further comprising automatically operating, by the control unit, the aircraft in response to said outputting.
Clause 23. The method of any of Clauses 13-22, wherein the control unit is an artificial intelligence or machine learning system.
Clause 24. A computer program comprising computer program instructions that, when executed by one or more computer processors of a computer system, cause the computer system to perform the method of any of Clauses 13-23.
Clause 25. A computer readable medium having stored thereon the computer program of Clause 24.
Clause 26. A control unit for determining a runway alert for an aircraft at an airport, wherein the control unit comprises one or more computer processors configured to implement the method of any of Clauses 13-23.
Clause 27. An aircraft comprising the control unit of Clause 26.

As described herein, examples of the present disclosure provide systems and methods that identify when an aircraft is approaching an active runway. The systems and methods provide an advisory or alert to a pilot of the aircraft that approaches the active runway. Examples of the present disclosure provide systems and methods for providing appropriate advisory notification to a pilot when approaching an active runway.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or features thereof) can be used in combination with each other. In addition, many modifications can be made to adapt a particular situation or material to the teachings of the various examples of the disclosure without departing from the scope of the claims. While the dimensions and types of materials described herein are intended to illustrate various examples of the disclosure, the examples are by no means limiting and are exemplary. Many other examples will be apparent to those of skill in the art upon reviewing the above description. The scope of the disclosure should, therefore, be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope of the disclosure is defined by the claims, and can include other examples that occur to those skilled in the art.

## Claims

1. A method for determining a runway alert for an aircraft at an airport, the method comprising:
monitoring, by a control unit, a position of the aircraft at the airport; and
outputting, by the control unit, the runway alert to the aircraft in response to the aircraft being within a predetermined distance of a runway at the airport.

2. The method of claim 1, further comprising determining, by the control unit, the predetermined distance in relation to a reference segment extending from a front portion of the aircraft.

3. The method of claim 2, wherein the reference segment is a linear segment or a conic segment.

4. The method of claim 2 or 3, wherein said outputting comprises outputting, by the control unit, the runway alert in response to the reference segment intersecting a defined portion of the runway.

5. The method of claim 4, further comprising basing, by the control unit, a length of the reference segment on an angle between the reference segment and the defined portion.

6. The method of claim 4 or 5, wherein the defined portion of the runway is a center line segment or a boundary edge segment of the runway.

7. The method of any preceding claim, further comprising showing, by the control unit, the runway alert on a display of a user interface of the aircraft.

8. The method of any preceding claim, further comprising tracking, by a tracking sub-system in communication with the control unit, the position of the aircraft at the airport.

9. The method of any preceding claim, wherein said monitoring comprises monitoring the position of the aircraft in relation to a map of the airport.

10. The method of any preceding claim, further comprising automatically operating, by the control unit, the aircraft in response to said outputting.

11. The method of any preceding claim, wherein the control unit is an artificial intelligence or machine learning system.

12. A computer program comprising computer program instructions that, when executed by one or more computer processors of a computer system, cause the computer system to perform the method of any preceding claim.

13. A computer readable medium having stored thereon the computer program of claim 12.

14. A system comprising:
a control unit for determining a runway alert for an aircraft at an airport, the control unit configured to implement the method of any of claims 1 to 11.

15. An aircraft comprising the system of claim 14.
